# EUROPÄISCHE PATENTSCHRIFT

(11) **EP 1 147 807 B1**
(45) Veröffentlichungstag und Bekanntmachung des Hinweises auf die Patenterteilung: **15.08.2007**
(21) Anmeldenummer: 01106003.5
(22) Anmeldetag: 10.03.2001
(51) Int. Cl.: B01J 8/02, B01J 19/24, F28D 9/00, B01J 19/32

(54) **Reaktor für die katalytische Umsetzung von Reaktionsmedien, insbesondere von gasförmigen Reaktionsmedien**
Reactor for the catalytic conversion of reactants, in particular gaseous reactants
Réacteur pour la conversion catalytique de réactifs, en particulier de réactifs gazeux

(30) Priorität: 19.04.2000 DE 10019381
(43) Veröffentlichungstag der Anmeldung: 24.10.2001
(73) Patentinhaber: Marold, Freimut Joachim, 46282 Dorsten (DE)
(72) Erfinder: Daun, Klaus-Dieter, 45289 Essen (DE)
(74) Vertreter: Albrecht, Rainer Harald

(56) Entgegenhaltungen:
- EP-A- 0 393 014
- DE-A- 4 336 986
- DE-C- 19 754 185
- US-A- 4 340 501

## Beschreibung

Die Erfindung betrifft einen Reaktor für die katalytische Umsetzung von Reaktionsmedien, insbesondere von gasförmigen Reaktionsmedien, nach dem Oberbegriff des Patentanspruches 1.

Ein derartiger Reaktor wird in der DE 197 54 185 C1 und im Übrigen in der als älteres Recht anzusehenden deutschen Patentanmeldung DE 198 48 208 vorgestellt. Hier kann an Stelle des Kühlmediums auch mit einem Heizmedium gearbeitet werden, wenn bei der katalytischen Reaktion Wärme nicht abgeführt, sondern zugeführt werden muss. Stets wird eine einwandfreie Temperaturlenkung entlang der Reaktionsstrecke erreicht. Denn bei Thermoblechen handelt es sich um mindestens zwei Blechplatten aus rostfreiem Stahl, die an vorgegebenen Punkten unter Bildung von Flachbereichen zusammengeschweißt und unter gleichsam Kissenbildung derart ausgeformt sind, dass elliptische Strömungskanäle entstehen, welche infolge der kissenförmigen Ausbildung die Turbulenz der Strömung erhöhen und damit zu hervorragenden Wärmeübertragungsverhältnissen führen. In diesen Strömungskanälen fließt das Kühlmedium oder gegebenenfalls auch Heizmedium. Derartige Thermobleche sind selbsttragend und ermöglichen die Verwirklichung eines kompakten Wärmetauschers mit großer Heizflächendichte. Da die Thermobleche nicht nur die Funktion der Wärmetauscherplatten übernehmen, sondern auch die für das Kühlmedium (gegebenenfalls Heizmedium) erforderlichen Strömungskanäle bilden, kann im Gegenstromverfahren gearbeitet werden.

Bei dieser älteren Ausführungsform besteht die Möglichkeit, das oder die Plattenpakete aus den Thermoblechen an die Behälterinnenwand anzupassen oder anpassungsfrei in den Reaktorbehälter einzusetzen. - Derartige Reaktoren haben sich an sich bewährt, sind jedoch weiter entwicklungsfähig.

Im Rahmen der US 4 340 501 wird ein Verfahren und eine zugehörige Vorrichtung zur Behandlung von Dampf mit einem Behälter beschrieben. Der Behälter ist mit einem Einlass und einem Auslass und einer dazwischen mit Abstand von den Behälterwänden angeordneten Innenstruktur ausgerüstet, welche mit einem Katalysator beschichtet ist.

Die EP 0 393 014 A2 beschreibt eine Einrichtung zur Behandlung von Gasen, insbesondere von Rauchgasen, die einen im Wesentlichen vertikal verlaufenden hohlen Mantel aufweist. In dem vorerwähnten Mantel werden verschiedene Einbauten, z.B. Böden, Kolonnentrenner oder Wäscher gehalten. Der Mantel ist durch zumindest zwei, einander kreuzende Trennwände unterteilt, wobei an den Trennwänden und den Innenwänden des Mantels Halterungen für das Auflegen der verschiedenen Einbauten angeordnet und an dem Mantel Anschlüsse bzw. Durchführungen für Leitungen vorgesehen sind.

Die DE 43 36 986 A1 befasst sich schließlich mit einer Kolonne zum Durchführen thermischer Trennungen mit einer senkrechten zylindrischen Kolonnenaußenwand, die einen Innenraum umgibt. Der Innenraum ist durch eine mittlere senkrechte Trennwand in zwei Raumhälften unterteilt.

Der Erfindung liegt die Aufgabe zugrunde, einen Reaktor für die katalytische Umsetzung von Reaktionsmedien, insbesondere von gasförmigen Reaktionsmedien, der eingangs beschriebenen Ausführungsform zu schaffen, der sich durch eine Mehrzahl beherrschbarer kleiner Volumina auszeichnet, so dass Reaktionen oder Prozessstufen auf einen limitierten Reaktorraum beschränkt werden und kontrollierbar sind.

Im Rahmen der Erfindung ist ein gattungsgemäßer Reaktor zur Lösung dieser Aufgabe gekennzeichnet durch eine Modulbauweise unter Bildung von Einzelreaktoren im Reaktorbehälter mit Trennwänden zwischen den Einzelreaktoren, wobei die Trennwände mit der die Einzelreaktoren umgebenden Behälteraußenwand kraftschlüssig verbunden sind und Zuganker bilden, wobei die Wärmetauscherplatten mit ihren Plattenrändern in Montagenuten der Trennwände und der Behälteraußenwand eingesetzt sind, und wobei die Wärmetauscherplatten in ihren Flachbereichen in über die Plattenhöhe und Plattenbreite vorgegebenen Abständen mittels Spannbolzen miteinander verbunden sind.

Diese Maßnahmen der Erfindung haben zur Folge, dass kritische Reaktionen oder Prozessstufen jeweils auf einen Einzelreaktor beschränkt und folglich unschwer kontrollierbar sind. Bei solchen kritischen Reaktionen oder Prozessstufen kann es sich um kinetisch limitierte Reaktionen oder Reaktionen handeln, die nicht im Gleichgewicht stehen und auch als "Hotspots" bezeichnet werden. Nach Lehre der Erfindung ist der Reaktor in Einzelreaktoren unterteilt, welche beherrschbare verhältnismäßig kleine Volumina bilden. In diesem Zusammenhang macht sich die Erfindung zugleich die Tatsache zu Nutze, dass die Trennwände zur Bildung der Einzelreaktoren als Zuganker herangezogen werden, so dass eine für den gesamten Reaktor bzw. Reaktorbehälter verhältnismäßig stabile Bauweise erreicht wird. Eine derart stabile Bauweise ist erforderlich, weil häufig Schwingungen aufgrund der Gasströmung auftreten. Dabei kann für den Reaktorbehälter eine kreisrunde oder mehreckige Bauweise verwirklicht sein. Durch die Modulbauweise bietet sich insbesondere eine rechteckige oder quadratische Ausführungsform an, die unschwer in die Einzelreaktoren unterteilt werden kann und in fertigungstechnischer Hinsicht besonders einfach und Kosten sparend ist. Im Rahmen der Erfindung können die Einzelreaktoren eigene Anschlüsse zum Zuführen und Abführen des Kühlmittels bzw. Heizmittels und des Reaktionsmediums aufweisen.

Um eine einwandfreie Funktionsweise zu gewährleisten, muss der Plattenabstand zwischen den Wärmetauscherplatten über die Höhe und Breite des Reaktors bzw. seiner Einzelreaktoren möglichst gleich sein. Aus den zwischen den Wärmetauscherplatten gelagerten Katalysatoren resultiert jedoch ein Ausbauchungseffekt. Zur Reduzierung dieses Ausbauchungseffektes sind die Wärmetauscherplatten mit ihren Plattenrändern in den Montagenuten der Trennwände und der Behälteraußenwand eingesetzt, so dass ein form- und kraftschlüssiger Verbund zwischen den Wärmetauscherplatten und den Trennwänden sowie der Behälteraußenwand erreicht wird.

Ferner lehrt die Erfindung in diesem Zusammenhang, dass die Wärmetauscherplatten in ihren Flachbereichen in über die Plattenhöhe und Plattenbreite vorgegebenen Abständen mittels den Spannbolzen miteinander verbunden sind. Dabei können zwischen den Flachbereichen der Wärmetauscherplatten die Spannbolzen umgebende Distanzhülsen angeordnet sein. Im Ergebnis wird dadurch die Ausbauchung der von den Katalysatoren belasteten Wärmetauscherplatten minimiert, so dass einwandfreie Befüllung und Entleerung gewährleistet ist.

Im Folgenden wird die Erfindung anhand einer lediglich ein Ausführungsbeispiel darstellenden Zeichnung näher erläutert; es zeigen:

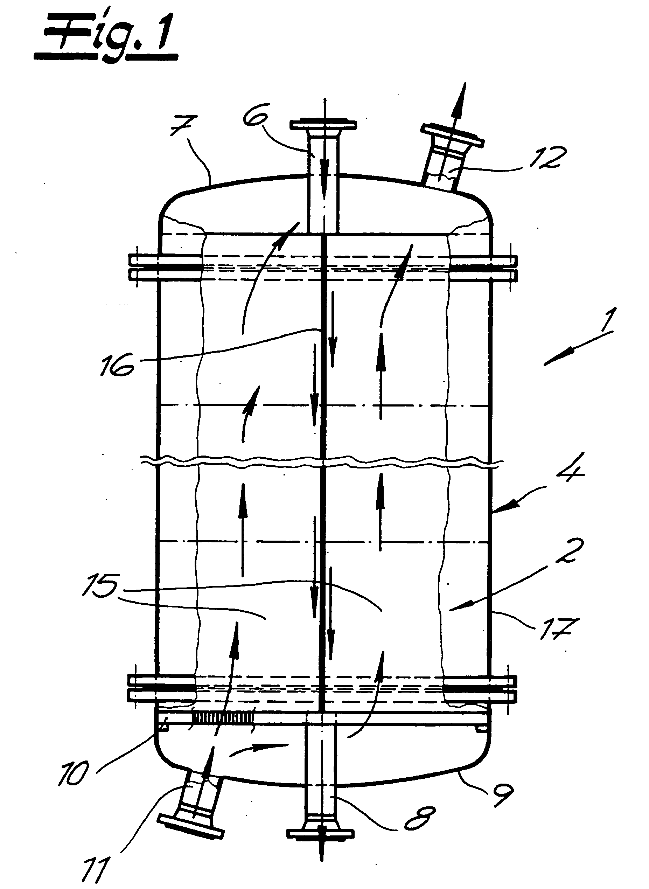

- Fig. 1: eine schematische Seitenansicht auf einen erfindungsgemäßen Reaktor,

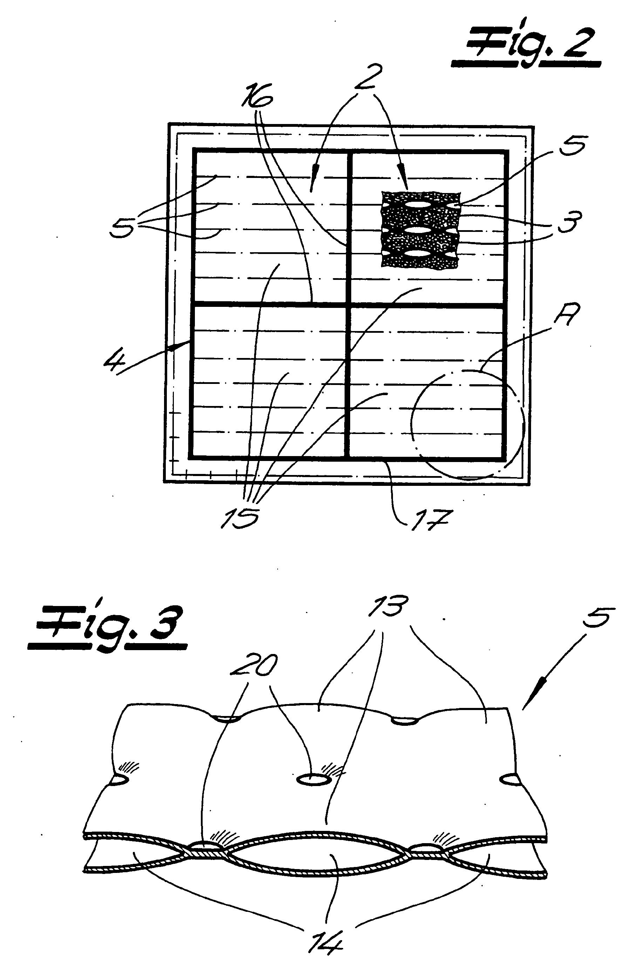

- Fig. 2: einen schematischen Horizontalschnitt durch den Gegenstand nach Fig. 1,
- Fig. 3: ausschnittsweise ein Thermoblech in schematischer Darstellung,

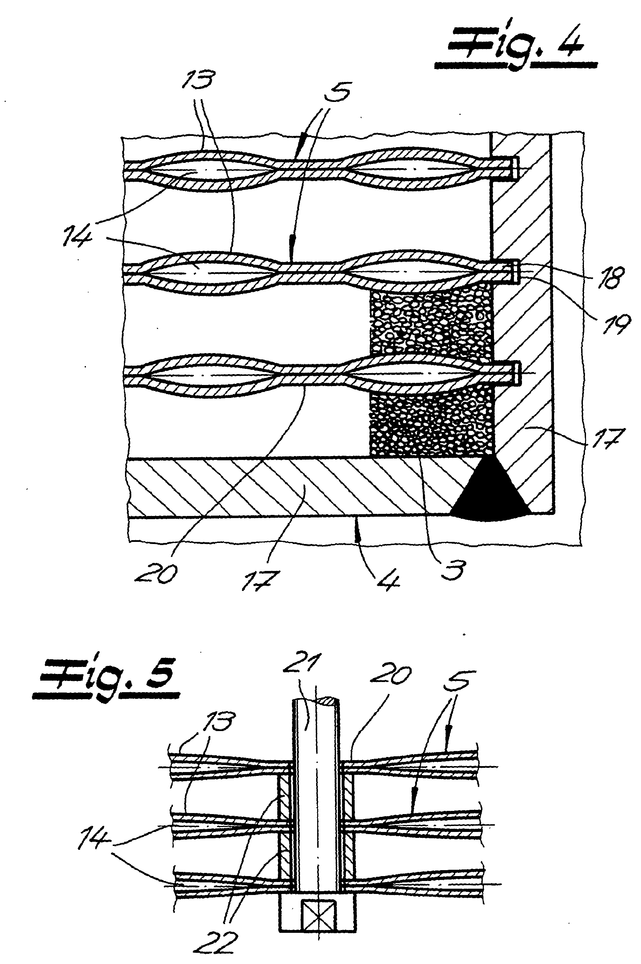

- Fig. 4: einen Ausschnitt A aus dem Gegenstand nach Fig. 2 und
- Fig. 5: eine abgewandelte Ausführungsform des Gegenstandes nach Fig. 4 im Bereich eines Spannbolzens.

In den Figuren ist ein Reaktor 1 für die katalytische Umsetzung von Reaktionsmedien, insbesondere von gasförmigen Reaktionsmedien, dargestellt. Dieser Reaktor 1 weist einen Plattenwärmetauscher 2 zum Kühlen eines Katalysators 3 in einem Reaktorbehälter 4 auf. In dem Reaktorbehälter 4 sind nebeneinander mit vorgegebenem Abstand voreinander Wärmetauscherplatten 5 angeordnet. Zwischen den Wärmetauscherplatten 5 ist der von dem jeweiligen Reaktionsmedium durchströmte Katalysator 3 unter Festbettbildung angeordnet. Ferner sind eine Kühlmediumzuführung 6 im Bereich der Behälterdecke 7 und eine Kühlmediumabführung 8 im Bereich des Behälterbodens 9 vorgesehen.

Die Wärmetauscherplatten sind als von dem Kühlmedium durchströmte Thermobleche 5 ausgebildet. Der Plattenwärmetauscher 2 aus den Thermoblechen 5 ist auf einen Siebboden 10 aufgesetzt. Der Siebboden 10 weist eine Maschenweite auf, die geringer als die Korngröße des Katalysators 3 ist, bei dem es sich um Kugeln, Zylinder, Strangpresslinge od. dgl. handeln kann. Im Bereich des Behälterbodens 9 ist eine Reaktionsmediumzuführung 11 und im Bereich der Behälterdecke 7 eine Reaktionsmediumabführung 12 vorgesehen. Das jeweilige Reaktionsmedium ist im Gegenstrom zu dem Kühlmedium geführt. Das ist durch Pfeile angedeutet. Ein solches Gegenstromverfahren lässt sich grundsätzlich auch dann verwirklichen, wenn das Reaktionsmedium oben in den Reaktorbehälter 4 eintritt und unten aus dem Reaktorbehälter 4 austritt und umgekehrt das Kühlmedium unten in den Reaktorbehälter 4 eintritt und oben aus dem Reaktorbehälter 4 austritt.

Der Behälterboden 9 und/oder die Behälterdecke 7, bei der es sich vorzugsweise um eine Haube handelt, sind lösbar mit dem Behältermantel des Reaktorbehälters 4 verbunden. Der Siebboden 10 ist mit dem Plattenwärmetauscher 2 und dem Katalysator 3 aus dem Reaktorbehälter 4 entfernbar. Allerdings kann auch nur der Katalysator entfernt werden.

Die Thermobleche 5 sind als im Wesentlichen geradflächige punktgeschweißte Bleche mit kissenartigen Ausformungen 13 und elliptischen Strömungskanälen 14 ausgebildet und geradlinig in vertikaler Orientierung auf dem Siebboden angeordnet. Dadurch werden die Strömungsverhältnisse für einerseits das Reaktionsmedium und andererseits das Kühlmedium optimiert, weil insoweit auf die Strömung des Reaktionsmediums und Kühlmediums behindernde Umlenkungen verzichtet wird. - Die Thermobleche 5 können zu einem oder mehreren Plattenpaketen zusammengesetzt sein. Die Füllhöhe des Katalysators 3 zwischen den Thermoblechen liegt bei 15 cm bis 20 cm unterhalb der Oberkante des Plattenwärmetauschers 2 bzw. seiner Thermobleche 5 und ist im Übrigen variabel..

Im Rahmen der Erfindung kann sich die Reaktionsmediumzuführung 11 auch im Bereich der Behälterdecke 7 und die Reaktionsmediumabführung 12 im Bereich des Behälterbodens 9 befinden.

Der Reaktor zeichnet sich durch eine Modulbauweise unter Bildung von Einzelreaktoren 15 im Reaktorbehälter 4 mit Trennwänden 16 zwischen diesen Einzelreaktoren 15 aus. Die Trennwände 16 sind mit der die Einzelreaktoren 15 umgebenden Behälteraußenwand 17 zumindest kraftschlüssig verbunden und bilden Zuganker in dem Reaktorbehälter 4. Nach dem Ausführungsbeispiel ist ein rechteckiger Reaktor bzw. Reaktorbehälter 4 dargestellt. Nicht gezeigt ist die Möglichkeit, dass die Einzelreaktoren 15 eigene Anschlüsse zum Zuführen und Abführen des Kühlmediums und des Reaktionsmediums aufweisen können.

Nach dem Ausführungsbeispiel sind die Wärmetauscherplatten 5 mit Ihren Plattenrändern 18 in Montagenuten 19 der Trennwände 16 und Behälteraußenwand 17 eingesetzt. Ferner sind die Wärmetauscherplatten 5 in ihren Flachbereichen 20 in über die Plattenhöhe und -breite vorgegebenen Abständen mittels Spannbolzen 21 miteinander verbunden. Zwischen den Flachbereichen 20 der Wärmetauscherplatten 5 sind die Spannbolzen 21 von Distanzhülsen 22 umgeben.

## Patentansprüche

1. Reaktor (1) für eine Umsetzung von Reaktormedien, insbesondere von gasförmigen Reaktionsmedien, mit einem Plattenwärmetauscher (2) zum Kühlen einer Reaktion in einem Reaktorbehälter(4), wobei in dem Reaktorbehälter(4) nebeneinander mit vorgegebenem Abstand voneinander Wärmetauscherplatten (5) angeordnet und sich zwischen den Wärmetauscherplatten (5) der von dem jeweiligen Reaktionsmedium durchströmte Reaktionsraum befindet, mit einer Kühlmediumzuführung (6) und einer Kühlmediumabführung (8), wobei die Wärmetauscherplatten (5) als von dem Kühlmedium durchströmte Thermobleche (5) ausgebildet sind, die im Wesentlichen geradflächige punktgeschweißte Bleche mit kissenartigen Ausformungen (13) und elliptischen Strömungskanälen (14) und geradlinig in vertikaler Orientierung auf einem Siebboden angeordnet sind darstellen, und eine Reaktionsmediumzuführung (11) und eine Reaktionsmediumabführung (12) vorgesehen ist, **gekennzeichnet durch**
a) eine Modulbauweise unter Bildung von Einzelreaktoren (15) im Reaktorbehälter (4) mit Trennwänden (16) zwischen den Einzelreaktoren(15), wobei die Trennwände (16) mit der die Einzelreaktoren (15) umgebenden Behälteraußenwand (17) kraftschlüssig verbunden sind und Zuganker bilden,
b) wobei die Wärmetauscherplatten (5) mit ihren Plattenrändern (18) in Montagenuten (19) der Trennwände (16) und der Behälteraußenwand (17) eingesetzt sind, und
c) wobei die Wärmetauscherplatten (5) in ihren Flachbereichen (20) in über die Plattenhöhe und Plattenbreite vorgegebenen Abständen mittels Spannbolzen (21) miteinander verbunden sind.

2. Reaktor nach Anspruch 1, **dadurch gekennzeichnet, dass** die Einzelreaktoren (15) eigene Anschlüsse zum Zuführen und Abführen des Kühlmittels und des Reaktionsmediums aufweisen.

3. Reaktor nach einem der Ansprüche 1 oder 2, **dadurch gekennzeichnet, dass** zwischen den Flachbereichen (20) der Wärmetauscherplatten (5) die Spannbolzen (21) umgebende Distanzhülsen (22) angeordnet sind.

## Claims

1. Reactor (1) for the conversion of reactor media, in particular gaseous reactor media, comprising a plate heat exchanger (2) for cooling a reaction in a reactor vessel (4), wherein heat exchanger plates (5) are arranged next to one another and at a predefined distance from one another in the reactor vessel (4) and the reaction chamber through which flows the respective reaction medium is located between the heat exchanger plates (5), comprising a cooling medium inlet (6) and a cooling medium outlet (8), wherein the heat exchanger plates (5) are designed as heat transfer plates (5) though which the cooling medium flows and which consist of substantially straight, spot-welded plates with cushion-like structures (13) and elliptical flow channels (14) and are arranged in a rectilinear manner in a vertical orientation on a sieve plate, and a reaction medium inlet (11) and a reaction medium outlet (12) is provided, **characterised by**
a) a modular construction to form individual reactors (15) in the reactor vessel (4) with separating walls (16) between the individual reactors (15), wherein the separating walls (16) are connected in a force-fitting manner to the vessel outer wall (17) surrounding the individual reactors (15) and form anchor rods,
b) wherein the heat exchanger plates (5) are inserted with their plate edges (18) in mounting grooves (19) on the separating walls (16) and the vessel outer wall (17), and
c) wherein the heat exchanger plates (5) are connected to one another by means of clamping bolts (21) in their flat regions (20) at predefined distances over the plate height and plate width.

2. Reactor according to claim 1, **characterised in that** the individual reactors (15) have their own inlet and outlet connections for the cooling medium and the reaction medium.

3. Reactor according to one of claims 1 or 2, **characterised in that** spacer sleeves (22) which surround the clamping bolts (21) are arranged between the flat regions (20) of the heat exchanger plates (5).

## Revendications

1. Réacteur (1) pour une conversion d'agents réactifs, en particulier d'agents réactifs gazeux, comprenant un échangeur de chaleur à plaques (2) pour le refroidissement d'une réaction dans une cuve de réacteur (4), des plaques d'échange thermique (5) étant juxtaposées dans la cuve de réacteur (4) à distance prédéfinie les unes des autres et l'espace réactionnel balayé par l'agent réactif respectif se situant entre les plaques d'échange thermique (5), une arrivée d'agent réfrigérant (6) et une évacuation d'agent réfrigérant (8), les plaques d'échange thermique (5) étant réalisées sous forme de tôles thermiques (5) balayées par l'agent réfrigérant, qui sont configurées sous forme de tôles soudées point par point essentiellement planes avec des profils mis en forme (13) de type coussin et des canaux d'écoulement elliptiques (14) et sont disposées linéairement dans l'orientation verticale sur un fond à tamis, et une arrivée d'agent réactif (11) et une évacuation d'agent réactif (12) étant prévues, **caractérisé par**
a) une construction modulaire en formant des réacteurs individuels (15) dans la cuve de réacteur (4) avec des cloisons (16) entre les réacteurs individuels (15), les cloisons (16) étant assemblées en force avec la paroi extérieure (17) de la cuve, qui entoure les réacteurs individuels (15), et formant des tirants d'ancrage,
b) les plaques d'échange thermique (5) étant mises en place par leurs bords (18) dans des gorges de montage (19) des cloisons (16) et de la paroi extérieure (17) de la cuve, et
c) les plaques d'échange thermique (5) étant assemblées entre elles dans leurs zones aplaties (18) au moyen de boulons de serrage (21) à des distances prédéfinies sur la hauteur et la largeur des plaques.

2. Réacteur suivant la revendication 1, **caractérisé en ce que** les réacteurs individuels (15) présentent des raccords individuels pour l'arrivée et l'évacuation de l'agent réfrigérant et de l'agent réactif.

3. Réacteur suivant l'une des revendications 1 et 2, **caractérisé en ce que** des manchons d'écartement (22) entourant les boulons de serrage (21) sont disposées entre les zones aplaties (2) des plaques d'échange thermique (5).
